# EUROPÄISCHE PATENTANMELDUNG

(11) **EP 2 966 384 A1**
(43) Veröffentlichungstag der Anmeldung: **13.01.2016**
(21) Anmeldenummer: 15176242.4
(22) Anmeldetag: 10.07.2015
(51) Int. Cl.: F25B 30/00, F24D 15/02, F24D 17/02, F24D 19/10

(54) **VORRICHTUNG ZUM KÜHLEN EINES TRINKWASSERVOLUMENSTROMS**

(30) Priorität: 11.07.2014 DE 202014103193 U
(71) Anmelder: Better Place GmbH, 41462 Neuss (DE)
(72) Erfinder: Spicker, Sebastian, 40549 Düsseldorf (DE)
(74) Vertreter: Bauer, Dirk

(57) **Zusammenfassung**

Die Erfindung betrifft eine Vorrichtung (25, 25') zum Kühlen eines Trinkwasservolumenstroms mit
a) einem ersten Wärmeübertrager (W1), der von dem Trinkwasservolumenstrom durchströmbar ist,
b) einem zweitem Wärmeübertrager (W2), der von einem Wasservolumenstrom durchströmbar ist,
c) einem aktiven Wärmetransfermodul (52) zur Übertragung von Wärme von dem ersten Wärmeübertrager (W1) auf den zweiten Wärmeübertrager (W2),
d) einer ersten Zirkulationsumwälzpumpe (36) für den den ersten Wärmeübertrager (W1) durchströmenden Trinkwasservolumenstrom,
e) einer zweiten Zirkulationsumwälzpumpe (46) für den den zweiten Wärmeübertrager (W2) durchströmenden Wasservolumenstrom,
f) einem ersten Anschluss (30) zum Einlass des zukühlenden Trinkwasservolumenstroms,
g) einem zweiten Anschluss (31) zum Auslass des gekühlten Trinkwasservolumenstroms,
h) einem dritten Anschluss (32) zum Einlass des zu erwärmenden Wasservolumenstroms,
i) einem vierten Anschluss (33) zum Auslass des erwärmten Wasservolumenstroms.

Um die Vorrichtung (25, 25') zum Kühlen eines Trinkwasservolumenstroms weiterzuentwickeln, sodass diese einfach und ohne das Erfordernis komplizierter Berechnungs- und Auslegungsvorgänge sowie das Zusammenstellen und Beschaffen einzelner Komponenten der Vorrichtung installiert und in Betrieb genommen werden kann, wird vorgeschlagen, dass sämtliche vorgenannten Komponenten a) bis i) zu einem Kompaktgerät zusammengefasst und auf einem gemeinsamen Träger und/oder in einem gemeinsamen Gehäuse angeordnet sind.

## Beschreibung

Die Erfindung betrifft eine Vorrichtung zum Kühlen eines Trinkwasservolumenstroms, mit
a) einem ersten Wärmeübertrager, der von dem Trinkwasservolumenstrom durchströmbar ist,
b) einem zweiten Wärmeübertrager, der von einem Wasservolumenstrom durchströmbar ist,
c) einem aktiven Wärmetransfermodul zum Übertragen von Wärme von dem ersten Wärmeübertrager auf den zweiten Wärmeübertrager,
d) einer ersten Zirkulationsumwälzpumpe für den den ersten Wärmeübertrager durchströmenden Trinkwasservolumenstrom,
e) einer zweiten Zirkulationsumwälzpumpe für den den zweiten Wärmeübertrager durchströmenden Wasservolumenstrom,
f) einem ersten Anschluss zum Einlass des zu kühlenden Trinkwasservolumenstroms,
g) einem zweiten Anschluss zum Auslass des gekühlten Trinkwasservolumenstroms,
h) einem dritten Anschluss zum Einlass des zu erwärmenden Wasservolumenstroms,
i) einem vierten Anschluss zum Auslass des erwärmten Wasservolumenstroms.

### Stand der Technik

Zur Vermeidung der Verkeimung in Leitungssystemen mit *erwärmtem* Trinkwasser gibt es bereits zahlreiche Regelwerke, die den Aufbau derartiger Systeme und die darin zulässigen Temperaturen verbindlich festlegen. So fordert die DIN EN 806 zwingend, dass die Wassertemperatur im gesamten System oberhalb einer Temperatur von + 50°C liegen muss. Nach geltender Lehrmeinung findet oberhalb dieser Temperatur eine Vermehrung von Mikroben, insbesondere von Legionellen, nicht mehr oder kaum noch statt. Darüber hinaus ist in dem DVGW-Arbeitsblatt W 551 gefordert, dass die Temperatur in Speichern für die Warmwassererwärmung zwingend oberhalb von + 60°C liegen muss, da das Verkeimungsrisiko zunimmt, wenn große Mengen an erwärmtem Trinkwasser bevorratet werden. Aus diesem Grunde ist es bei Warmwassersystemen Stand der Technik, ein Zirkulationssystem zu installieren, das bei Stillstand der Anlage, d.h. zu Zeiten, wo kein warmes Trinkwasser gezapft wird, mittels einer Pumpe ein Zwangsumlauf herbeiführt. Das innerhalb der einzelnen Rohrstränge durch Wärmeabgabe an das Gebäude abgekühlte Warmwasser wird zu dem Speicher oder dem Durchlauferhitzer zurückgeführt und dort wieder auf ein erhöhtes Temperaturniveau aufgeheizt.

Die DIN EN 806 sowie die VDI-Richtlinie 6023 fordern darüber hinaus auch eine Begrenzung der Temperatur für das *kalte* Trinkwasser auf eine Temperatur von maximal + 25°C, da ab dieser Temperatur eine Steigerung des Mikrobenwachstums zu erwarten sei. Bei der Festlegung dieser Temperatur scheint es sich jedoch um einen Kompromiss zwischen technischer Umsetzbarkeit und hygienischen Anforderungen zu handeln, da neuere Untersuchungen belegen, dass ein nennenswertes Wachstum von Mikroben, insbesondere auch von Legionellen, bereits bei deutlich geringeren Temperaturen beginnt. Aus diesem Grunde dürfte in der aktuellen VDI-Richtlinie 6023 vom April 2013 - neben der Begrenzung der Temperatur des kalten Trinkwassers auf + 25°C - eine Empfehlung enthalten sein, die Temperatur des Wassers möglichst unter + 20°C zu halten. In der Realität dürfte sowohl im Winter bei beheizten Räumen als auch im Sommer mit Innenraumtemperaturen von + 26°C und mehr, davon ausgegangen werden, dass die Temperatur des "kalten" Trinkwassers nicht unterhalb der Grenze von + 25°C verbleibt und erst recht nicht unterhalb der empfohlenen Temperatur von + 20°C. Dies gilt insbesondere bei bereits kurzen Unterbrechungen des Zapfbetriebs, da sich die Temperatur des in der Rohrleitung stehenden kalten Trinkwassers trotz ordnungsgemäßer Wärmedämmung schon nach vergleichsweise kurzer Zeit der Raumtemperatur annährt.

In diesem Kontext schlägt die EP 1 626 034 A1 in Verbindung mit einer Bekämpfung von Legionellen mittels chemischer und/oder elektrolytischer Mittel auch eine Zirkulation des Kaltwassers vor den Verbrauchsstellen vor. Zusätzlich zu der bloßen Zirkulation soll das Kaltwasser in der Zirkulation auch gekühlt werden. Darüber hinaus ist in der EP 1 626 034 B1 erwähnt, dass die Abwärme der Kaltwasserkühlung für die Erwärmung von Warmwasser verwendet wird. Dabei wird eine Kühlung des Kaltwassers auf eine Temperatur zwischen 10°C und 15°C vorgeschlagen.

Abgesehen davon, dass eine Kaltwasserkühlung nach den aktuell geltenden Vorschriften nicht zwingend vorgeschrieben ist, erfordert die Realisierung eines solchen Systems einen vergleichsweise großen baulichen Aufwand, vor allem bei bestehenden Gebäuden. Aber auch im Fall von Neubauten sind der Installationsaufwand sowie der entstehende Mehraufwand an Kosten nicht unerheblich. Hinzu kommt, dass die Verwendung von chemischen Mitteln dem Minimierungsangebot der Trinkwasserverordnung widerspricht.

### Aufgabe

Der Erfindung liegt somit die Aufgabe zugrunde, eine Vorrichtung zum Kühlen eines Trinkwasservolumenstroms vorzuschlagen, die einfach und ohne das Erfordernis komplizierter Berechnungs- und Auslegungsvorgänge sowie das Zusammenstellen und Beschaffen einzelner Komponenten der Vorrichtung installiert und in Betrieb genommen werden kann.

### Lösung

Ausgehend von einer Vorrichtung mit den eingangs genannten Merkmalen wird die vorgenannte Aufgabe dadurch gelöst, dass sämtliche Komponenten a) bis i) zu einem Kompaktgerät zusammengefasst und auf einen gemeinsamen Träger und/oder in einem gemeinsamen Gehäuse angeordnet sind.

Die erfindungsgemäße Vorrichtung enthält somit alle erforderlichen Komponenten, die zum Betrieb einer Kühlung eines "kalten" Trinkwasservolumenstroms auf ein das Legionallenwachstum sicher unterbindendes Temperaturniveau erforderlich sind. Ein wirksamer Erhalt der Trinkwasserhygiene kann entsprechend mit rein physikalischen Verfahren bei gleichzeitiger höchstmöglicher Energieeffizient erreicht werden. In Abhängigkeit von der Größe des in einem Gebäude vorhandenen oder zu installierenden Leitungsnetzes für kaltes Trinkwasser können sämtliche in der Vorrichtung enthaltenen Komponenten zueinander passend und einen wirtschaftlichen Betrieb garantierend ausgelegt werden. So lässt sich die erfindungsgemäße Vorrichtung in unterschiedlichen Baugrößen mit unterschiedlich leistungsfähigen Wärmetransfermodulen, unterschiedlich groß dimensionierten Wärmeübertragern und Zirkulationsumwälzpumpen sowie unterschiedlich groß dimensionierten Anschlüssen, d.h. insbesondere Leitungsquerschnitten, auslegen und bereitstellen. Der jeweilige Planer bzw. Bauherr hat somit die Möglichkeit, ein für seine Anforderungen passendes Modell des erfindungsgemäßen Kompaktgeräts zu wählen, ohne sich um die Zusammenstellung der Einzelkomponenten und deren korrekte technische und wirtschaftliche Betriebsweise kümmern zu müssen. Die Vorrichtung nach der Erfindung erspart somit Planungs- und Beschaffungsaufwand und vermeidet die Gefahr einer falschen Auslegung von Einzelkomponenten bzw. das Risiko einer fehlerhaften Montage oder Verschaltung der Komponenten miteinander. Ferner wird der Aufwand bei der Leitungsverlegung und Installation vor Ort reduziert, da die Komponenten in dem Kompaktgerät bereits fertig installiert sind. Die erfindungsgemäße Vorrichtung macht sich somit das Prinzip des "Plug and Play" zunutze, um dem Anwender die Installation und Inbetriebnahme so einfach wie möglich zu gestalten. Schließlich kommt die Vorrichtung nach der Erfindung auch den immer bedeutsamer werdenden ästhetischen Forderungen der Nutzer entgegen, da insbesondere bei einer Anordnung der Komponenten in einem gemeinsamen Gehäuse die Menge der sichtbaren Leitungen auf ein Mindestmaß reduziert und das Gehäuse im Gegensatz zu einer individuellen Verschaltung der Einzelkomponenten ein ansprechendes Design aufweisen kann.

Gemäß einer Ausgestaltung der Erfindung ist vorgesehen, dass die Vorrichtung auch mindestens eine Rückschlagklappe aufweist, die in einem den ersten Anschluss, einen ersten Abschnitt des ersten Wärmeübertragers und den zweiten Anschluss enthaltenden ersten Strang und/oder die in einem den dritten Anschluss, einen ersten Bereich des zweiten Wärmeübertragers und den vierten Anschluss enthaltenden zweiten Strang angeordnet ist. Rückschlagklappen stellen eine einfache Möglichkeit dar, um im Falle des Zapfbetriebs eine Umkehrung der Strömungsrichtung in der Zirkulationsleitung zu verhindern. Aus diesem Grunde ist es vorteilhaft, diese Rückschlagklappen sogleich in das Kompaktgerät zu integrieren.

Darüber hinaus wird bei einer besonders vorteilhaften Ausführungsform der Vorrichtung vorgeschlagen, einen dritten Wärmeübertrager zu integrieren, der von dem erwärmten Wasservolumenstrom durchströmbar ist, wobei vorzugsweise ein mittels des dritten Wärmeübertragers erwärmter Wasservolumenstrom vorzugsweise aus dem vierten Anschluss abgebbar ist. Eine derartige Kompaktgerät-Variante ist dazu geeignet, um in einem System mit zentraler Warmwasserbereitung mittels eines Wassererwärmers nach dem Durchlaufprinzip (häufig auch als "Frischwasserstation" bezeichnet) das nicht erwärmte, also "kalte", Trinkwasser kontinuierlich mittels des ersten Wärmeübertragers auf eine gewünschte Solltemperatur zu kühlen und die dabei entstehende Wärme mittels des zweiten Wärmeübertrages direkt in der Warmwasserzirkulation zur Deckung des Auskühlverluste zu nutzen. Der in der hier beschriebenen Variante enthaltene dritte Wärmeübertrager dient als Warmwassererwärmer und muss zu Zeiten ohne Zapfbetrieb lediglich die für die Nachheizung des zirkulierenden Warmwassers erforderliche Restwärme liefern. Dabei sollten der zweite Wärmeübertrager und der dritte Wärmeübertrager in der Warmwasserzirkulationsleitung vorzugsweise in Reihe angeordnet, d.h. nacheinander durchströmbar, sein.

Sofern eine Verbindungsleitung zwischen einem ersten Strang, der den ersten Anschluss, den ersten Wärmeübertrager und den zweiten Anschluss enthält, und einem zweiten Strang, der den dritten Anschluss, den zweiten Wärmeübertrager und den vierten Anschluss enthält, vorgesehen ist, wobei vorzugsweise die Verbindungsleitung von einem Trinkwasservolumenstrom durchströmbar ist, der anschließend in dem dritten Wärmeübertrager erwärmbar ist, erhält der dritte Wärmeübertrager auch die Funktion einer so genannten Frischwasserstation, um im Falle, dass Warmwasser gezapft wird, den erforderlichen Wärmebedarf zur Erwärmung des Trinkwassers auf das gewünschte Warmwasser-Temperaturniveau zu decken, wobei die Wärme aus einer Heizungsanlage entnommen werden kann. Das Kompaktgerät sollte in diesem Fall vorzugsweise auch eine dritte Zirkulationsumwälzpumpe aufweisen, bei der es sich dann typischerweise um eine Heizungsumwälzpumpe handelt, mit der Heizungswasser zu der nicht von dem warmen Trinkwasser durchströmten "warmen Seite" des dritten Wärmeübertragers förderbar ist.

Gemäß einer Weiterbildung der erfindungsgemäßen Vorrichtung ist eine in der Verbindungsleitung angeordnete Rückschlagklappe vorgesehen, mit der ein Überströmen von dem zweiten Strang in den ersten Strang verhinderbar ist. Eine derartige Rückschlagklappe verhindert eine Durchströmung der Kaltwasserzirkulationsleitung in der dem Zirkulationsbetrieb entgegengesetzten Richtung, wenn der dritte Wärmeübertrager dazu dient, an einer Zapfstelle Warmwasser bereitzustellen.

Vorzugsweise ist mittels des dritten Wärmeübertragers Wärme von einem Heizsystem bereitgestellten Wärmeträgermedium, insbesondere Heizungswasser, auf den erwärmten Wasservolumenstrom (Zirkulationsstrom) oder einen anderen Trinkwasservolumenstrom übertragbar. Je nachdem, ob an einer Zapfstelle Warmwasser entnommen wird oder aber ohne Zapfbetrieb das Warmwasser zirkuliert, wird mittels des dritten Wärmeübertragers die jeweils erforderliche Temperaturerhöhung des Warmwasserzirkulations- bzw. des zu entnehmenden Warmwasserstroms ermöglicht.

Wie bereits zuvor erwähnt, kann der dritte Wärmeaustauscher Bestandteil einer Frischwasserstation sein, in der ein über die Verbindungsleitung strömender Trinkwasservolumenstrom im Durchlaufprinzip erwärmbar ist, wobei die Frischwasserstation vorzugsweise einen Mischer aufweist, mit dem die Temperatur des die Wärme abgebenden Wärmeträgermediums, das vorzugsweise einem Heizungssystem entstammt, einstellbar ist. Vorzugsweise sollte das Wärmeträgermedium, insbesondere Heizwasser, über ein Regelventil zu dem dritten Wärmeübertrager gelangen, wobei es sich bei dem Regelventil vorzugsweise um ein Mischventil in Form eines Drei-Wege-Ventils handeln sollte. Somit wird eine Beimisch-Schaltung erreicht, die sich durch kurze Rohrwege zwischen dem Regelventil, der Umwälzpumpe für das Wärmeträgermedium und dem dritten Wärmeübertrager auszeichnet und auf diese Weise eine sehr gute Regelqualität garantiert. Ein Regler sorgt in diesem Zusammenhang dafür, dass die einstellbare Solltemperatur für das erwärmte Trinkwasser beibehalten wird, in dem der Stellhub des Regelventils verändert wird. Alternativ könnte das Regelventil von einem Zwei-Wege-Ventil anstatt des Drei-Wege-Ventils gebildet werden.

Im Hinblick auf die anzuwendende Wärmetransfermethode wird vorgeschlagen, dass das aktive Wärmetransfermodul eine Kompressionskältemaschine mit einem Kältemittelkreislauf ist, wobei sich ein zweiter Abschnitt des ersten Wärmeübertragers und ein zweiter Bereich des zweiten Wärmeübertragers in dem Kältemittelkreislaufs befinden und wärmetechnisch gekoppelt ist. Vorzugsweise sollte des Weiteren das Kältemittel zwischen dem zweiten Abschnitt und dem zweiten Bereich mittels eines Verdichters, insbesondere eines Kolbenverdichters, verdichtet werden, und zwischen dem zweiten Bereich und dem zweiten Abschnitt mittels eines Expansionsventils entspannt werden. Zur Erzeugung der erforderlichen Kälteleistung kann somit auf konventionelle und bewährte und daher zu geringen Kosten verfügbare Kältetechnik zurückgegriffen werden. Der erste Wärmeübertrager, welcher zum Beispiel in Form eines Verdampfers vorliegen kann, lässt sich vorteilhafterweise in einen ersten mit Trinkwasser durchströmten Abschnitt und einen zweiten mit Kältemittel durchströmten Abschnitt aufteilen. Analog dazu, lässt sich der zweite Wärmeübertrager, beispielsweise ein Kondensator, in einen ersten mit Heizungspufferwasser beziehungsweise mit erwärmten Trinkwasser durchströmten und einen zweiten mit Kältemittel durchströmten Bereich aufteilen.

Alternativ zu der zuvor beschriebenen Kompressionskältemaschine kann es sich bei dem aktiven Wärmetransfermodul aber auch um eine Absorptionskältemaschine oder eine Kältemaschine nach dem Joule-Thomson-Effekt oder um ein Peltier-Element oder eine magnetische Kühlung handeln. Grundsätzlich sind sämtliche Wärmetransfermethoden für die erfindungsgemäße Vorrichtung denkbar.

Ferner wird für die Vorrichtung noch ein Regelmodul vorgeschlagen, das die folgenden Funktionen aufweisen kann:
- Veränderung eines von der ersten Zirkulationsumwälzpumpe und/oder der zweiten Zirkulationsumwälzpumpe und/oder der Heizungsumwälzpumpe geförderten Volumenstroms, insbesondere in Abhängigkeit von einer
   - Temperatur des an dem ersten Anschluss eintretenden Trinkwasservolumenstroms und/oder
   - Temperatur des an dem zweiten Anschluss austretenden Trinkwasservolumenstroms und/oder
   - Temperatur des an dem dritten Anschluss eintretenden Wasservolumenstroms und/oder
   - Temperatur des an dem vierten Anschluss austretenden Wasservolumenstroms.
- Einstellung und Regelung einer Solltemperatur des aus dem zweiten Anschluss austretenden gekühlten Trinkwasservolumenstroms,
- Einstellung der von dem Wärmetransfermodul gelieferten Kälteleistung, insbesondere Veränderung des durch das Expansionsventil strömenden Kältemittelvolumenstroms.

Schließlich ist nach der Erfindung noch vorgesehen, dass die Anschlüsse des Kompaktgeräts als Gewindeanschlüsse mit Innengewinde oder Außengewinde oder als Kegelverschraubungen oder zur Herstellung einer Klemm- oder Quetschverbindung mit ankommenden oder abgehenden Rohren oder Leitungen oder als Flanschanschluss ausgestaltet sind.

### Ausführungsbeispiele

Die Erfindung wird nachfolgend anhand zweier Ausführungsbeispiele von Kompaktgeräten zur Trinkwasserkühlung, die in der Zeichnung dargestellt sind, näher erläutert. Es zeigt:
- Figur 1a:: einen Systemaufbau einer Trinkwasserinstallation mit indirekt beheiztem Warmwasserspeicher und Warmwasserzirkulation sowie mit Trinkwasserzirkulationskühlung und Wärmerückgewinnung,
- Figur 1b:: wie Figur 1a, jedoch mit dezentraler Warmwasserbereitung und Heizungspufferspeicher anstelle eines indirekt beheizten Warmwasserspeichers und einer Warmwasserzirkulation,
- Figur 2:: eine erste Ausführungsform einer erfindungsgemäßen Vorrichtung zur Verwendung in den Systemaufbauten gemäß den Figuren 1a und 1b,
- Figur 3:: einen Systemaufbau einer Trinkwasserinstallation mit Frischwasserstation zur zentralen Warmwasserbereitung sowie mit Trinkwasserzirkulationskühlung und Wärmerückgewinnung
- Figur 4a:: ein zweites Ausführungsbeispiel einer erfindungsgemäßen Vorrichtung zur Verwendung in dem Systemaufbau gemäß Figur 3, und
- Figur 4b:: wie Figur 4a, jedoch mit einer Drosselschaltung.

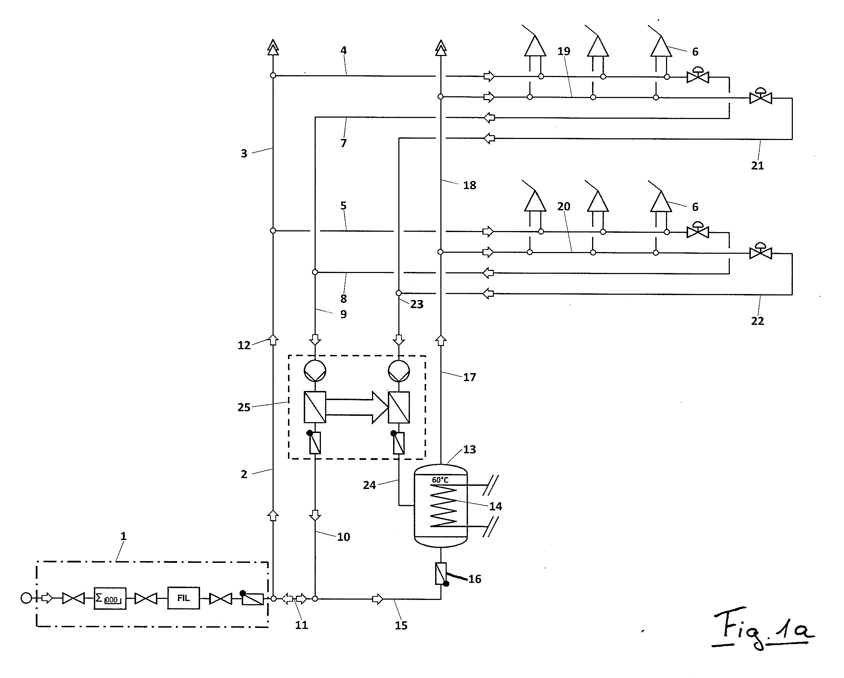

Figur 1a zeigt einen Systemaufbau einer Trinkwasserinstallation, die in üblicher Weise einen Trinkwasserhausanschluss 1, enthaltend (in Fließrichtung betrachtet) ein erstes Absperrventil, eine Wasseruhr, ein zweites Absperrventil, ein Wasserfilter, je nach vorhandenem Versorgungsdruck einen Druckminderer, ein drittes Absperrventil sowie eine Rückschlagklappe, umfasst. Die vorgenannten Einzelkomponenten des Trinkwasserhausanschlusses sind mit einem strichpunktierten Rahmen eingefasst. Das von einem Trinkwasserversorger bereitgestellte kalte Trinkwasser besitzt beim Eintritt in die Hausinstallation eine Temperatur von ca. 10° Celsius.

Über isolierte Leitungen **2**, **3**, **4** und **5** gelangt das kalte Trinkwasser zu einer Mehrzahl von Zapfstellen 6, die sich im vorliegenden Fall auf zwei Geschossen eines nicht näher dargestellten Gebäudes befinden. Sämtliche vorgenannten Leitungen **2** bis **5** sind Bestandteil einer Kaltwasserzirkulationsleitung, zu der die dem Rücklauf des kalten Trinkwassers von den Zapfstellen **6** dienenden Leitungen **7**, **8**, **9**, **10** und **11** gehören. Zu Zeiten, in denen kein kaltes Trinkwasser an einer der Zapfstellen **6** entnommen wird, zirkuliert somit das Trinkwasser durch die vorgenannten Leitungen in Richtung der Pfeile **12**.

Das dargestellte System weist darüber hinaus ein Warmwasser-Leitungsnetz auf, das von einem Warmwasserspeicher **13** ausgeht, in dem sich ein Wärmeüberträger 14 in Form eines Rohrbündelwärmetauschers befindet, der von Heizungswasser durchströmt wird. An der Unterseite des Warmwasserspeichers **13** strömt über eine von der Leitung **11** abzweigende Leitung **15** sowie über eine Rückschlagklappe **16** kaltes Trinkwasser in den Warmwasserspeicher **13** nach.

Wenn an einer der Zapfstellen **6** Warmwasser entnommen wird, strömt dieses über die Leitungen **17**, **18**, **19** oder **20** zu der jeweiligen Zapfstelle **6**. Wird hingegen kein Warmwasser entnommen, so zirkuliert das Warmwasser über die vorgenannten Leitungen **17** bis 20 sowie über weitere, für eine Rückströmung des Warmwassers dienende Leitungen **21**, **22**, **23** und **24** zu dem Warmwasserspeicher **13**.

In Figur 1a ist die erfindungsgemäße Vorrichtung **25** in Form eines Kompaktgerätes mit einem in gestrichelten Linien ausgeführten Rahmen eingefasst. Wie sich aus dem Systemaufbau gemäß Figur 1a ergibt, strömt das rezirkulierte kalte Trinkwasser durch die Leitung **9** in die Vorrichtung **25** ein und verlässt diese durch die Leitung **10**. Darüber hinaus strömt durch die Vorrichtung **25** auch das rezirkulierte warme Trinkwasser über die Leitung **23** ein und verlässt die Vorrichtung **25** über die Leitung **24**. Der genauere Aufbau der Vorrichtung **25** wird weiter unten erläutert.

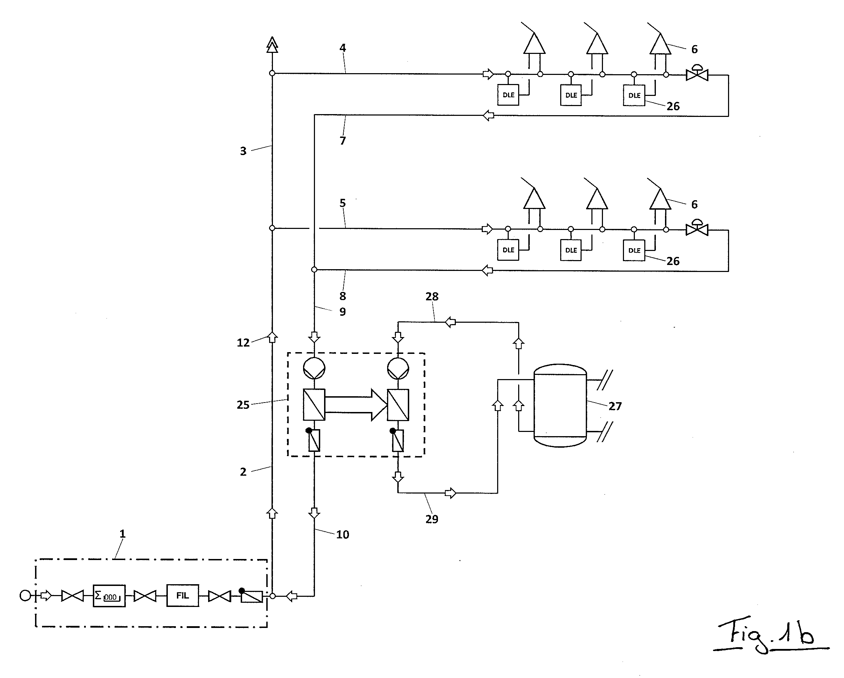

Einen alternativen Systemaufbau einer Trinkwasserinstallation ohne zentrale Warmwasserbereitung sondern mit einer dezentralen Warmwasserbereitung und einem Heizungspufferspeicher zeigt die Figur 1 b. Der Aufbau der Leitungen für die Kaltwasserentnahme und -zirkulation ist identisch mit der bei dem Systemaufbau gemäß Figur 1a, weshalb an dieser Stelle nicht darauf eingegangen werden soll. Die Warmwasserbereitung erfolgt im Falle der Installation gemäß 1 b mit Hilfe von Durchlauferhitzern **26**, die elektrisch oder mittels Gas betrieben werden und jeder einzelnen Zapfstelle **6** zugeordnet sind.

Die Installation gemäß Figur 1b weist einen Pufferspeicher **27** für Heizungswasser auf, der über nicht näher dargestellte Leitungen an ein Heizsystem angeschlossen und von dort mit Heizungswasser versorgt wird. An den Pufferspeicher **27** ist darüber hinaus eine Zirkulationsleitung angeschlossen, die aus einer Leitung **28** und einer Leitung **29** besteht, die beide in dem Pufferspeicher **27** münden bzw. von diesem abgehen. Wie auch in der Installation gemäß Figur 1a führen die von kaltem Trinkwasser durchflossenen Leitungen **9** und **10** in die identisch ausgeführte Vorrichtung **25** hinein bzw. aus dieser heraus. Darüber hinaus führt die an der Unterseite des Pufferspeichers **27** abgehende Leitung **28** in die Vorrichtung **25** hinein und die an der Oberseite des Pufferspeichers **27** einmündende Leitung **29** aus der Vorrichtung **25** heraus.

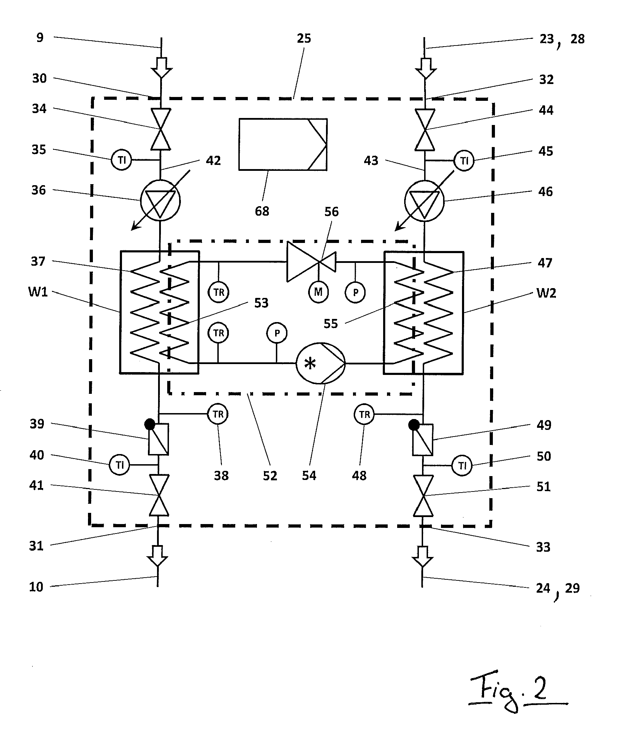

Der Aufbau der Vorrichtung **25** wird im Folgenden an Hand der Figur 2 näher erläutert:
Die vier Leitungen **9**, **10** sowie **23**, **24** oder **28**, **29** sind auch in Figur 2 eingetragen. Die Leitung **9** führt zu einem ersten Anschluss **30**, von einem zweiten Anschluss **31** führt die Leitung **10** weg. Darüber hinaus ist die Leitung **23** (Figur 1a) oder **28** (Figur **1**b) an einen dritten Anschluss **32** angeschlossen und von einem vierten Anschluss **33** führt die Leitung **24** (Figur 1 a) oder **29** (Figur 1 b) weg. Die Vorrichtung **25** umfasst (in Durchströmungsrichtung des rezirkulierten kalten Trinkwassers aus Leitung **9** betrachtet) ein Absperrventil **34**, ein Thermometer **35**, eine Zirkulationsumwälzpumpe **36**, einen ersten Wärmeübertrager **W1**, einen Temperaturfühler **38**, eine Rückschlagklappe **39**, ein Thermometer **40** sowie ein Absperrventil **41**. Sämtliche vorgenannten Komponenten sind in Reihe hintereinander angeordnet und befinden sich in einem ersten Strang 42 der Vorrichtung **25**. Hingegen befinden sich die nachfolgend aufgezählten Komponenten in einem zweiten Strang **43** der Vorrichtung 25: Ein Absperrventil **44**, ein Thermometer **45**, eine zweite Zirkulationsumwälzpumpe 46, ein zweiter Wärmeübertrager **W2**, einen Temperaturfühler **48**, eine Rückschlagklappe **49**, ein Thermometer 50 sowie ein Absperrventil **51**. Anstelle der vorgenannten Thermometer **35**, **40**, **45**, **50** können jeweils auch Temperaturfühler eingesetzt werden.

Der erste Wärmeübertrager **W1** weist zwei stofflich von einander getrennte, aber thermisch miteinander verbundene Abschnitt **37**, **53** auf. Der durch den "warmen" Abschnitt **37** strömende und zu kühlende Trinkwasservolumenstrom wird dabei durch ein durch den "kalten" Abschnitt **53** strömendes und beim Wärmetauscher verdampfendes Kältemittel gekühlt.

Analog dazu lässt sich auch der zweite Wärmeübertrager **W2** in zwei stofflich von einander getrennte, aber thermisch miteinander verbundene Bereiche **47**, **55** aufteilen. Der erste "kalte" Bereich **47** wird von einem Wasservolumenstrom durchströmt, wohingegen das Kältemittel durch den zweiten "warmen" Bereich **55** geleitet wird. Je nach Ausführungsform handelt es sich bei dem Wasservolumenstrom um, zirkuliertes oder erwärmtes Trinkwasser gemäß Figur 1a oder um ein in dem Pufferspeicher **27** zirkulierendes Heizungspufferwassers gemäß Figur 1 b.

Um die bei der Kühlung des den ersten Strang **42** durchströmenden Trinkwasservolumenstroms anfallende Wärme von dem ersten Abschnitt 37 des ersten Wärmeübertragers **W1** auf den zweiten Bereich **55** des zweiten Wärmeübertragers **W2**, der in dem zweiten Strang 43 der von dem zirkulierten Warmwasser oder zirkulierendem Heizungspufferwasser durchströmt wird, übertragen zu können, weist die Vorrichtung **25** ein Wärmetransfermodul **52** auf, das mit einer strichpunktierten Linie umgeben ist, wobei die strichpunktierte Linie den jeweils mit Kältemittel durchströmten Abschnitt **53** des Wärmeübertragers **W1** und Bereich **55** des Wärmeübertragers **W2** umrahmt. Bei dem Wärmetransfermodul **52** handelt es sich um eine Kompressionskältemaschine mit einem von dem ersten Wärmeübertrager **W1** gebildeten Kältemittelverdampfer, der dem zu kühlenden kalten Trinkwasser die Wärme entzieht. Der zweite Abschnitt **53** des ersten Wärmeübertragers **W1** ist in einem Kältemittelkreislauf des Wärmetransfermoduls **52** integriert. Das den Wärmetauscher **W1** verlassende Kältemittel wird mittels eines Kompressors **54** verdichtet und anschließend in dem zweiten Bereich **55** des Wärmeübertragers **W2** (in diesem Ausfürhungsbeispiel in Form eines Kondensators) verflüssigt. Über ein einstellbares Expansionsventil **56** wird das Kältemittel anschließend wieder entspannt, um sodann im zweiten kältemittelhaltigen Abschnitt 53 des ersten Wärmeübertragers **W1** wieder in die gasförmige Phase überzutreten. Die bei der Verflüssigung in dem zweiten Wärmeübertrager **W2** freiwerdende Wärme wird auf den Wasservolumenstrom in dem ersten Bereich 47 des zweiten Wärmeübertragers **W2** übertragen.

Mit Hilfe eines Regelmoduls **68**, beispielsweise in Form einer MikroprozessorSteuerung/Regelung, können zahlreiche Optionen der Vorrichtung **25** realisiert werden, wie beispielsweise eine Nachtabsenkung, unterschiedliche Zeitprogramme sowie einstellbare Sollwerte. Insbesondere können Temperaturfühler Drucksensoren an die Eingänge des Regelmoduls **68** angeschlossen sein. Über seine Ausgänge kann das Regelmodul **68** die erste und zweite Zirkulationsumwälzpumpe **36** bzw. **46** das einstellbare Expansionsventil **56** sowie den Kompressor **54** beeinflussen bzw. regeln.

Die Anschlüsse **30** bis **33** der Vorrichtung **25** können beispielsweise abhängig von der Baugröße als Gewindeanschlüsse mit Innen- oder Außen-Rohranschlussgewinden, als Flanschanschlüsse oder als einfache Rohrenden zum Anpressen ausgestaltet sein.

Sämtliche Komponenten sind in einem Kompaktgerät auf einer gemeinsamen Trägerplatte aus Stahlblech montiert, die typischerweise für eine Wandmontage vorbereitet ist. Typischerweise wird der gesamte Aufbau von einer abnehmbaren Gehäuseabdeckung verborgen. Komponenten, die einen Rückschluss auf den aktuellen Betriebszustand zulassen (z.B. Thermometer oder Bedienfelder der Pumpen) sind typischerweise ausgeschnitten, so dass eine Diagnosemöglichkeit ohne Demontage der Gehäuseschale möglich ist. In der Ausgestaltung des Gehäuses sind viele Varianten denkbar, die jedoch den grundsätzlichen Aufbau der Komponenten und deren Funktion nicht verändern. Die Größe der Grundplatte und damit der gesamten Geräteeinheit ist abhängig von der jeweiligen Baugröße und soll hier nicht näher definiert werden.

Die gesamte Anordnung der Komponenten und deren Funktion sind jedoch grundsätzlich auch in einem bodenstehenden Gehäuse möglich und ebenso von der Erfindung erfasst. Gerade bei sehr großen Bauformen für große Trinkwasseranlagen (Krankenhäuser, Mehrfamilienhäuser u.ä.) ist eine wandhängende Ausführung der Erfindung nur noch schwer möglich.

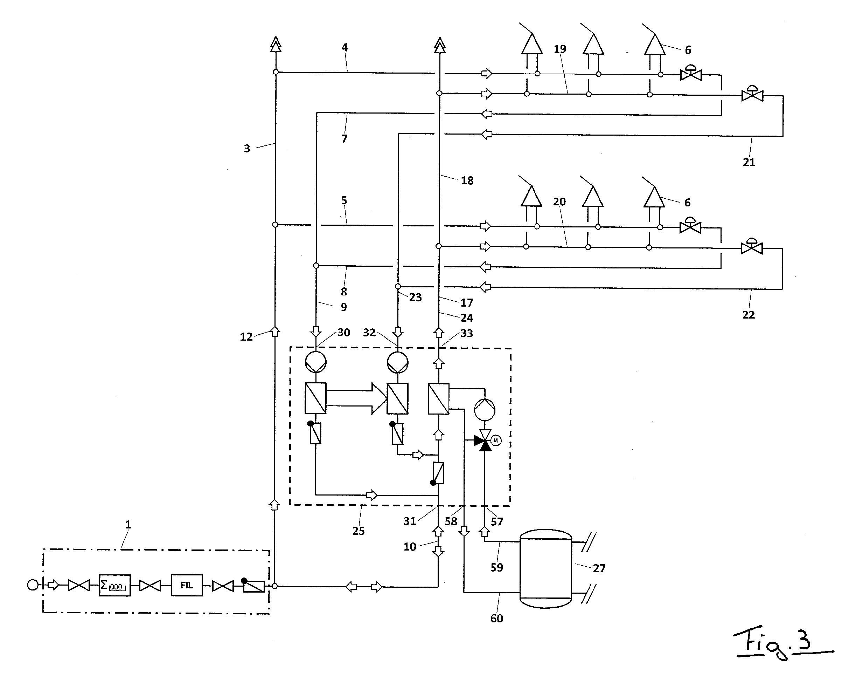

Der in Figur 3 gezeigte Systemaufbau einer alternativen Trinkwasserinstallation weist - wie der in Figur 1 a gezeigte Systemaufbau - eine Zirkulationsleitung sowohl für das kalte Trinkwasser als auch eine für das warme Trinkwasser auf. Auf weitere Erläuterungen hierzu kann daher verzichtet werden. Die an die abweichend aufgebaute Vorrichtung 25' anschließenden Leitungen 9 und 10 sowie 23 und 24 sind in sofern identisch auch wenn sie an anderen Stellen angeordnet sind. Die Leitung 24 fällt im Fall der Ausführungsform gemäß Figur 3 mit der Warmwasservorlaufleitung (Leitung 17 in Figur 1a) zusammen.

Wiederum führt die Leitung 9 an den ersten Anschluss 30, geht die Leitung 10 von dem zweiten Anschluss 31 ab, führt die Leitung 23 an den dritten Anschluss 32 und geht die Leitung 24 von dem vierten Anschluss 33 ab. Im Gegensatz zu der zuvor beschriebenen ersten Variante der Vorrichtung 25 besitzt die zweite Variante der Vorrichtung 25' zwei weitere Anschlüsse 57 und 58, die der Zuführung von Wärmeträgermedium aus dem Pufferspeicher 27 und der Rückführung von abgekühlten Heizungspufferwasser aus der Vorrichtung 25' dienen. An die Anschlüsse 57 und 58 sind zwei Leitungen 59 und 60 angeschlossen.

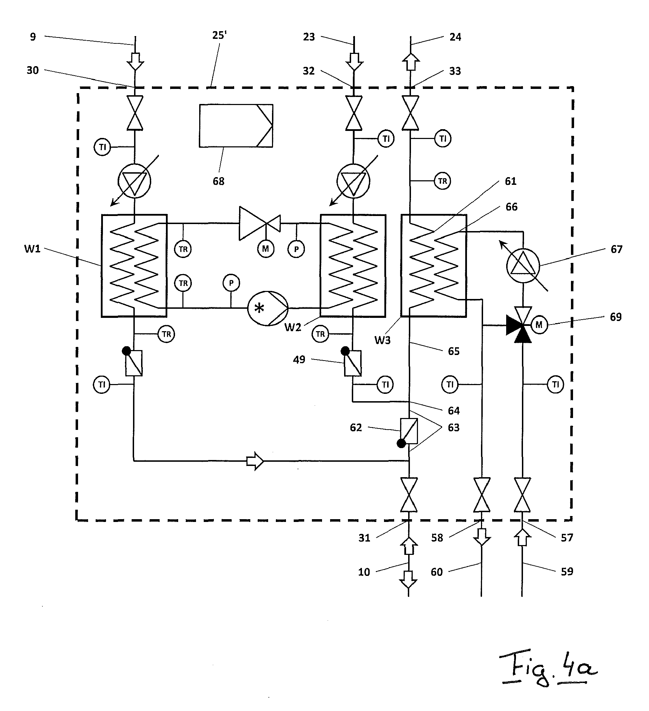

Die Funktionsweise der Vorrichtung 25' aus Figur 3 wird nunmehr mit Bezugnahme auf die Figur 4a näher erläutert:

Die Vorrichtung **25'** umfasst einen dritten Wärmeübertrager **W3**, der zum einen dazu dient, in Zeiten, in denen kein Warmwasser entnommen wird, die Zirkulationswärmeverluste auszugleichen, die von dem zweiten Wärmeübertrager **W2** nicht ausgeglichen werden können. Auf Grund der Wärmerückgewinnung, die bei der Kühlung des kalten Trinkwassers anfällt, ist die von dem dritten Wärmeübertrager **W3** zu liefernde Wärmemenge allerdings geringer als im Falle ohne die Wärmerückgewinnung.

Wenn an einer Zapfstelle **6** gemäß Figur 3 allerdings Warmwasser entnommen wird, strömt über die Leitung **10** sowie eine mit einer Rückschlagklappe **62** versehene Verbindungsleitung **63** kaltes Trinkwasser an einem Abzweig **64** vorbei und durch eine Leitung **65** in den dritten Wärmeübertrager **W3**, um dort auf die gewünschte Temperatur erwärmt zu werden und anschließend die Vorrichtung **25'** über die Leitung **24** zu verlassen. Auf Grund der Rückschlagklappe **49** kann das zu erwärmende Trinkwasser nicht durch den zweiten Wärmeübertrager **W2**, d. h. in entgegengesetzte Richtung durch die Warmwasserzirkulationsleitung, strömen, sondern nur durch den dritten Wärmeübertrager **W3**. Der dritte Wärmeübertrager **W3** lässt sich in zwei Teile **61**, **66** aufteilen, wobei ein erster "kalter" Teil **61** mit zirkulierendem Trinkwasser beziehungsweise bei Zapfvorgängen mit kaltem Trinkwasser, und ein zweiter "warmer" Teil **66** mit heißem Wärmeträgermedium, beispielsweise Heizungswasser, durchströmt wird. Es ist dabei vorgesehen, dass das Wärmeträgermedium Wärme an das zu erwärmende Trinkwasser überträgt. Das heißt, dass der erste kalte Teil **61** wärmeleitend mit dem zweiten warmen Teil **66** verbunden ist. Der zweite Teil **66** ist über die Leitungen **59** und **60** an den Pufferspeicher **27** gemäß Figur 3 des Heizsystems angeschlossen Über ein Regelventil **69** in Form eines Drei-Wege-Ventils wird nach dem Beimischprinzip gerade soviel warmes Wasser aus dem Pufferspeicher **27** in einen "kleinen" Zirkulationskreis umfassend eines Heizwasserumwälzpumpe **67**, den zweiten Teil **66** des Wärmübertragers **W3** sowie das Regelventil **69** zugeführt, dass das zu erwärmende Trinkwasser die gewünschte Temperatur beim Verlassen der Vorrichtung **25'** erhält. Die Vorrichtung **25'** erfüllt somit neben der Kühlfunktion für das kalte Trinkwasser und einer Wärmerückgewinnung für die Warmwasserzirkulation die Funktionalität einer Frischwasserstation, die von dem ersten Teil **61** des dritten Wärmeübertragers **W3** und dem damit zusammenwirkenden zweiten Teil **66** des Wärmeübertrager **W3** gebildet wird, der von warmen Heizungswasser aus dem Pufferspeicher **27** durchströmt wird. Zusätzlich zu den Anschlüssen **30** bis **33**, die bei dem Kompaktgerät der Variante 1 gemäß Figur 2 vorhanden sind, umfasst die zweite Variante des Kompaktgeräts gemäß Figur 4a zwei weitere Anschlüsse **57** und **58** für das dem Pufferspeicher **27** entnommene bzw. zu diesem zurückgeführte Heizungswasser. Wieder sind alle Komponenten der Vorrichtung **25'** zu einem Kompaktgerät zusammengefasst. Alle Komponenten sind beispielsweise auf einer Trägerplatte montiert und von einem gemeinsamen Gehäuse umschlossen.

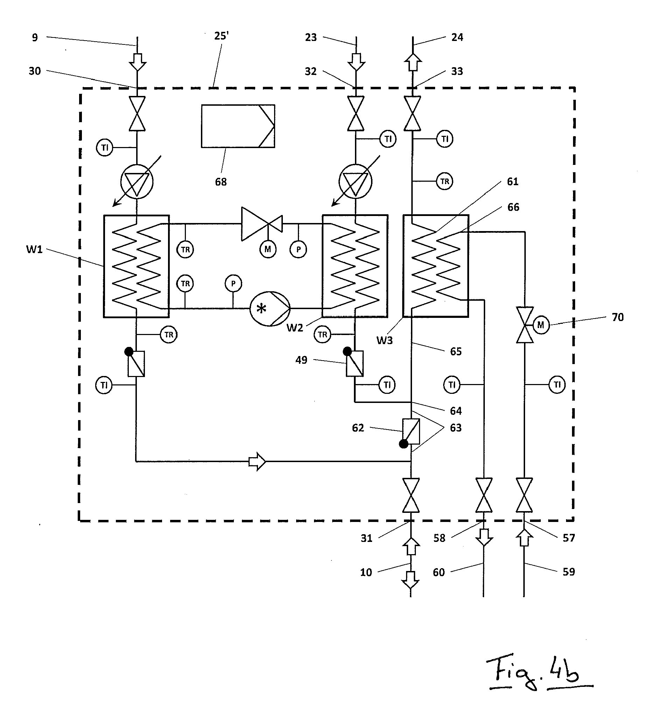

In der Figur 4b wird eine alternative zu dem Drei-Wege-Ventil gemäß Figur 4a dargestellt. Und zwar werden das Drei-Wege-Ventil und die Heizwasserumwälzpumpe **67** durch eine mit einem Zwei-Wege-Ventil **70** aufgebaute Drosselschaltung ersetzt. Dieses Zwei-Wege-Ventil **70** enthält keinen Bypass, weshalb auf die Heizumwälzpumpe **67** verzichtet werden kann. Die Beschickung würde in diesem Fall von der Heizungsanlage übernommen werden.

### Bezugszeichen

- 1: Trinkwasserhausanschluss
- 2: Leitung
- 3: Leitung
- 4: Leitung
- 5: Leitung
- 6: Zapfstelle
- 7: Leitung
- 8: Leitung
- 9: Leitung
- 10: Leitung
- 11: Leitung
- 12: Pfeil
- 13: Warmwasserspeicher
- 14: Wärmeübertrager
- 15: Leitung
- 16: Rückschlagklappe
- 17: Leitung
- 18: Leitung
- 19: Leitung
- 20: Leitung
- 21: Leitung
- 22: Leitung
- 23: Leitung
- 24: Leitung
- 25: Vorrichtung
- 25': Vorrichtung
- 26: Durchlauferhitzer
- 27: Pufferspeicher
- 28: Leitung
- 29: Leitung
- 30: Erster Anschluss
- 31: Zweiter Anschluss
- 32: Dritter Anschluss
- 33: Vierter Anschluss
- 34: Absperrventil
- 35: Thermometer
- 36: Zirkulationsumlaufpumpe
- 37: Erster Abschnitt
- 38: Temperaturfühler
- 39: Rückschlagklappe
- 40: Thermometer
- 41: Absperrventil
- 42: Erster Strang
- 43: Zweiter Strang
- 44: Absperrventil
- 45: Thermometer
- 46: Zirkulationsumwälzpumpe
- 47: Zweiter erster Bereich
- 48: Temperaturfühler
- 49: Rückschlagklappe
- 50: Temperaturfühler
- 51: Absperrventil
- 52: Wärmetransfermodul
- 53: zweiter Abschnitt
- 54: Kompressor
- 55: zweiter Bereich
- 56: Expansionsventil
- 57: Anschluss
- 58: Anschluss
- 59: Leitung
- 60: Leitung
- 61: Dritter erster Teil
- 62: Rückschlagklappe
- 63: Verbindungsleitung
- 64: Abzweig
- 65: Leitung
- 66: zweiter Teil
- 67: Heizwasserumwälzpumpe
- 68: Regelmodul
- 69: Regelventil
- 70: Zwei-Wege-Ventil

- W1: Wärmeübertrager
- W2: Wärmeübertrager
- W3: Wärmeübertrager

## Patentansprüche

1. Vorrichtung (25, 25') zum Kühlen eines Trinkwasservolumenstroms mit
a) einem ersten Wärmeübertrager (W1), der von dem Trinkwasservolumenstrom durchströmbar ist,
b) einem zweitem Wärmeübertrager (W2), der von einem Wasservolumenstrom durchströmbar ist,
c) einem aktiven Wärmetransfermodul (52) zur Übertragung von Wärme von dem ersten Wärmeübertrager (W1) auf den zweiten Wärmeübertrager (W2),
d) einer ersten Zirkulationsumwälzpumpe (36) für den den ersten Wärmeübertrager (W1) durchströmenden Trinkwasservolumenstrom,
e) einer zweiten Zirkulationsumwälzpumpe (46) für den den zweiten Wärmeübertrager (W2) durchströmenden Wasservolumenstrom,
f) einem ersten Anschluss (30) zum Einlass des zukühlenden Trinkwasservolumenstroms,
g) einem zweiten Anschluss (31) zum Auslass des gekühlten Trinkwasservolumenstroms,
h) einem dritten Anschluss (32) zum Einlass des zu erwärmenden Wasservolumenstroms,
i) einem vierten Anschluss (33) zum Auslass des erwärmten Wasservolumenstroms,
**dadurch gekennzeichnet, dass** sämtliche vorgenannten Komponenten a) bis i) zu einem Kompaktgerät zusammengefasst und auf einem gemeinsamen Träger und/oder in einem gemeinsamen Gehäuse angeordnet sind.

2. Vorrichtung (25, 25') nach Anspruch 1, **gekennzeichnet durch** mindestens eine Rückschlagklappe, die in einem den ersten Anschluss (30), einen ersten Abschnitt (37) des ersten Wärmeaustauschers (W1) und den zweiten Anschluss (31) enthaltenden ersten Strang (42) und/oder die in einem den dritten Anschluss (32), einen ersten Bereich (47) des zweiten Wärmeübertragers (W2) und den vierten Anschluss (33) enthaltenden zweiten Strang (43) angeordnet ist.

3. Vorrichtung (25') nach Anspruch 1 oder 2, **gekennzeichnet durch** einen dritten Wärmeübertrager (W3), der von dem kalten Trinkwasservolumenstrom und/ oder dem rezirkulierten erwärmten Wasservolumenstrom durchströmbar ist, wobei ein mittels des dritten Wärmeübertrager (W3) erwärmter Wasservolumenstrom vorzugsweise **durch** den vierten Anschluss (33) aus der Vorrichtung (25') abgebbar ist.

4. Vorrichtung (25') nach Anspruch 3, **dadurch gekennzeichnet, dass** der zweite Wärmeaustauscher (W2) und der dritte Wärmeaustauscher (W3) in Reihe angeordnet sind.

5. Vorrichtung (25') nach Anspruch 3 oder 4, **gekennzeichnet durch** eine Verbindungsleitung (63) zwischen einem ersten Strang (42), der den ersten Anschluss (30), den ersten Wärmeübertrager (W1) und den zweiten Anschluss (31) enthält, und einem zweiten Strang (43) der den dritten Anschluss (32), den zweiten Wärmeübertrager (W2) und den vierten Anschluss (33) enthält, wobei vorzugsweise die Verbindungsleitung (63) von einem Trinkwasservolumenstrom durchströmbar ist, der in dem dritten Wärmeübertrager (W3) erwärmbar ist.

6. Vorrichtung (25') nach Anspruch 5, **gekennzeichnet durch** eine in der Verbindungsleitung (63) angeordnete Rückschlagklappe (62) mit der ein Überströmen von dem zweiten Strang (43) in den ersten Strang (42) verhinderbar ist.

7. Vorrichtung (25') nach einem der Ansprüche 3 bis 6, **dadurch gekennzeichnet, dass** mittels des dritten Wärmeübertragers (W3) Wärme von einem von einem Heizsystem bereitgestellten Wärmeträgermedium auf einen kalten Trinkwasservolumenstrom oder einen rezirkulierten Warmwasservolumenstrom übertragbar ist.

8. Vorrichtung (25') nach einem der Ansprüche 3 bis 7 sowie 5, **dadurch gekennzeichnet, dass** der dritte Wärmeübertrager (W3) Bestandteil einer Frischwasserstation ist, in der ein über die Verbindungsleitung (63) strömender Trinkwasservolumenstrom im Durchlaufprinzip erwärmbar ist, wobei die Frischwasserstation ein Regelventil aufweist, mit dem die Temperatur des die Wärme abgebenden Wärmträgermediums einstellbar ist.

9. Vorrichtung (25, 25') nach einem der Ansprüche 1 bis 8, **dadurch gekennzeichnet, dass** das aktive Wärmetransfermodul (52) eine Kompressionskältemaschine mit einem Kältemittelkreislauf ist, wobei sich ein zweiter Abschnitt (53) des ersten Wärmeübertragers (W1) und ein zweiter Bereich (55) des zweiten Wärmeübertragers (W2) in dem Kältemittelkreislauf befinden, wobei des weiteren das Kältemittel zwischen dem zweiten Abschnitt (53) und dem zweiten Bereich (55) mittels eines Verdichters (54), vorzugsweise eines Kolbenverdichters, verdichtet wird und zwischen dem zweiten Bereich (55) und dem zweiten Abschnitt (53) mittels eines Expansionsventils (56) entspannt wird.

10. Vorrichtung (25, 25') nach einem der Ansprüche 1 bis 8, **dadurch gekennzeichnet, dass** das aktive Wärmetransfermodul (52) eine Absorptionskältemaschine oder eine Kältemaschine nach dem Joule-Thomson-Effekt ist oder ein Peltier-Element oder eine magnetische Kühlung aufweist.

11. Vorrichtung (25, 25') nach einem der Ansprüche 1 bis 10, **gekennzeichnet durch** ein Regelmodul
- zur Veränderung eines von der ersten Zirkulationsumwälzpumpe (36) und/oder der zweiten Zirkulationsumwälzpumpe (46) geförderten Volumenstroms, insbesondere in Abhängigkeit von einer
- Temperatur des an dem ersten Anschluss (30) eintretenden Trinkwasservolumenstroms und/oder
- Temperatur des an dem zweiten Anschluss (31) austretenden Trinkwasservolumenstroms und/oder
- Temperatur des an dem dritten Anschluss (32) eintretenden Wasservolumenstroms und/oder
- Temperatur des an dem vierten Anschluss (33) austretenden Wasservolumenstroms und/oder
- zur Einstellung einer Solltemperatur des aus dem zweiten Anschluss (31) austretenden gekühlten Trinkwasservolumenstroms und/oder
- zur Anpassung der Leistung des aktiven Wärmetransfermoduls (52), insbesondere zur Veränderung des **durch** das Expansionsventil in dem Kältemittelkreislauf strömenden Kältemittelvolumenstroms und/oder der Drehzahl des Kompressors einer Kompressionskältemaschine.
